# EUROPEAN PATENT APPLICATION

(11) **EP 4 654 468 A2**
(43) Date of publication of application: **26.11.2025**
(21) Application number: 24789031.2
(22) Date of filing: 11.04.2024
(51) Int. Cl.: H02S 50/00, H02S 40/22, G06Q 50/06, G06Q 50/10

(54) **DEVICE FOR PERFORMING SAFETY FUNCTION, AND SOLAR POWER GENERATION SYSTEM COMPRISING SAME**

(30) Priority: 12.04.2023 KR 20230048123
(71) Applicant: Hanwha Solutions Corporation, Jung-gu Seoul 04541 (KR)
(72) Inventor: LEE, Kang Min, Seoul 04541 (KR); KANG, Hyeon Min, Seoul 04541 (KR); KIM, Jeong Hwan, Seoul 04541 (KR); BANG, Young Gyun, Seoul 04541 (KR)
(74) Representative: Mooser, Sebastian Thomas
(86) International application number: PCT/KR2024/004814
(87) International publication number: WO 2024/215089

(57) **Abstract**

A device for performing a safety function, according to one aspect, comprises: an electronic circuit that includes a switching element, a first resistor, and a second resistor; and a processor that controls the operation of the electronic circuit so that when a predetermined condition is satisfied, a first voltage applied to the electronic circuit is converted into a second voltage.

## Description

### Technical Field

The disclosure relates to a device for performing a safety function and a photovoltaic power generation system including the device.

### Background Art

A photovoltaic power generation system should ensure stability by assessing abnormal states and emergency situations, which may occur during operation of the system, in real time. In case of an emergency situation, the photovoltaic power generation system should include a safety function which blocks output of a photovoltaic (PV) module for safety and controls a voltage to or below a safety voltage within a specific period of time according to a condition required by each country and product. In this regard, as global standards for industrial safety become more diverse, there is a growing demand for a rapid shutdown (RSD) function in a photovoltaic power generation system.

Meanwhile, a module-level power conversion device (or module-level power control device) (hereinafter referred to as module-level power electronics (MLPE)) is being introduced to a photovoltaic power generation system to improve the performance of a PV module and increase power generation efficiency.

Meanwhile, there is a demand for the introduction of a device which performs a safety function while stably outputting a safety voltage even in an emergency situation and is easy to implement.

### Disclosure of Invention

### Technical Problem

The disclosure provides a device which performs a safety function and a photovoltaic power generation system including the device, which may perform the safety function more stably in an emergency situation.

The disclosure provides a device which performs a safety function and a photovoltaic power generation system including the device, which may easily perform the safety function without any complex configuration such as an integrated circuit or the like.

### Solution to Problem

A device for performing a safety function according to an aspect includes: an electronic circuit including a switching element, a first resistor and a second resistor; and a processor configured to control operation of the electronic circuit such that a first voltage applied to the electronic circuit is converted into a second voltage in case that a certain condition is satisfied.

A photovoltaic power generation system according to another aspect includes: a plurality of photovoltaic (PV) modules; and a device connected to each of the plurality of PV modules, wherein the device includes an electronic circuit including a switching element, a first resistor, and a second resistor and a processor configured to control the electronic circuit such that a first voltage applied to the electronic circuit is converted into a second voltage according to a state of the photovoltaic power generation system.

### Advantageous Effects of Invention

Because a safety voltage is output using a resistor, a safety function may be implemented safely without any complex circuit configuration.

The level of a safety voltage may be easily adjusted or set according to forward characteristics of a diode.

A device for performing a safety function may operate stably without causing any burden, such as power loss, on the entire system.

A safety voltage may be output using simple semiconductor characteristics without any complex process of setting a safety voltage through control of a PWM controller.

Because only with a simple circuit configuration a safety voltage is output, the instability of voltage control caused by a complex control algorithm and a defect in a semiconductor integrated circuit may be resolved.

Because the level of a safety voltage may be configured according to the simple forward characteristics of a diode, an agile circuit change may be possible depending on safety requirements of a user.

### Brief Description of Drawings

FIG. 1 is a diagram illustrating an example of a photovoltaic power generation system according to an embodiment.
FIG. 2 is a block diagram illustrating an example of a device for performing a safety function according to an embodiment.
FIG. 3 is a diagram illustrating an example of an electronic circuit according to an embodiment.
FIG. 4 is a diagram illustrating another example of an electronic circuit according to an embodiment.
FIG. 5 is a diagram illustrating an example of operation of a device for performing a safety function according to an embodiment.

### Best Mode for Carrying Out the Disclosure

A device for performing a safety function according to an aspect includes: an electronic circuit including a switching element, a first resistor and a second resistor; and a processor for controlling operation of the electronic circuit such that a first voltage applied to the electronic circuit is converted into a second voltage in case that a certain condition is satisfied.

### Mode for Carrying Out the Disclosure

The terms used in embodiments are selected from commonly used terms as much as possible, but these may vary depending on the intention of engineers working in the field, case law, the emergence of new technologies, or the like. Additionally, in certain cases, there are terms arbitrarily selected by the applicant, and in such cases, the meanings of the terms will be described in detail in the relevant description section. Therefore, the terms used in the specification should be defined based on the meanings of the terms and the overall content of the specification, rather than simply based on the names of the terms.

Throughout the specification, when a part is said to "include" a component, this does not mean that the part excludes other components, but rather that the part may further include other components, unless otherwise stated.

Additionally, terms including ordinal numbers, such as "first", "second", or the like, used in the specification may be used to describe various components, but the components should not be limited by the terms. The terms may be used to distinguish one component from another component.

Hereinafter, preferred embodiments of the disclosure will be described in detail with reference to the attached drawings. The detailed description disclosed below, together with the attached drawings, is intended to explain exemplary embodiments of the disclosure and is not intended to represent the only embodiments in which the disclosure may be executed. To clearly explain the disclosure in the drawings, parts which are not related to the description may be omitted, and the same reference numerals may be used for identical or similar components throughout the specification.

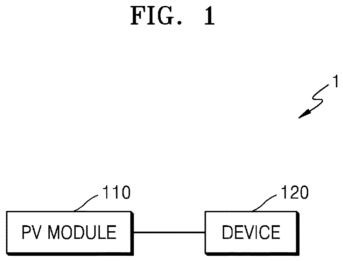

FIG. 1 is a diagram illustrating an example of a photovoltaic power generation system according to an embodiment.

Referring to FIG. 1, a photovoltaic power generation system 1 may include a PV module 110 and a device 120. Meanwhile, in addition to the components illustrated in FIG. 1, other general-purpose components may be further included in the system 1.

The PV module 110 may be a module which produces electrical power using solar energy. For example, the PV module 110 may be included in a plural number in the system 1.

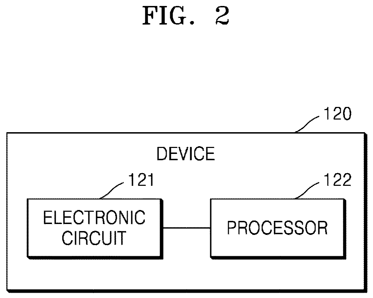

The device 120 may be a device which converts an output voltage of the PV module 110, which is connected to the device, into a predefined safety voltage when an emergency situation occurs. Examples of the device 120 for performing a safety function may be described with reference to FIGS. 2 to 4.

For example, the device 120 may be an MLPE or a device connected to an MLPE. Alternatively, the device 120 may be a device included in an MLPE. Here, the MLPE may be either an optimizer or a micro inverter.

As an example, in case that the MLPE is an optimizer, the system 1 may include a single inverter. In this case, a single MLPE may be connected to a single PV module 110, and the MLPE may optimize power output from the PV module 110 to output it to a single inverter (e.g. a string inverter). A current converted by the inverter (e.g. from a direct current to an alternating current) may be output to a load or grid.

As illustrated in FIG. 1, a single device 120 may be connected to a single PV module 110, but this is not limited thereto. For example, depending on the structure adopted by the photovoltaic power generation system 1, the PV module 110 and the device may be connected with each other in many-to-one or many-to-many, and the connection form is not limited to either one. In another embodiment, the system 1 may be configured in a form in which a plurality of groups are connected in series to each other, the group consisting of n PV modules 110 and n devices 120 (n is a natural number equal to or greater than 2).

Additionally, although not shown in FIG. 1, the photovoltaic power generation system 1 may include an MLPE, an inverter, or a grid.

The device 120 may share resources of a processor or the like which is built into the MLPE. Accordingly, the MLPE may be connected in one-to-one correspondence with the PV module 110, but this is not limited thereto. For example, depending on the structure adopted by the photovoltaic power generation system 1, the PV module 110 and the MLPE may be connected with each other in many-to-one or many-to-many, and the connection form is not limited to either one.

For example, in case that the MLPE is an optimizer, the inverter may be provided in a power conversion system (PCS) to perform power conversion to supply power produced by the PV module 110 to a load or grid.

The device 120, MLPE, or inverter may analyze various data received from the PV module 110, MLPE, load, grid, or the like to monitor an operation situation of the system 1. In case that an abnormal situation occurs during monitoring, i.e. in case that a switch to a safe mode is required, a safety voltage may be output through the device 120.

In case that an MLPE is included in the system 1, an output voltage of the PV module 110 may be converted into a safety voltage by controlling a switching element of a buck converter. In this case, a pulse width modulation (PWM) controller should be provided to control the switching element. Therefore, in case that the PWM controller fails or an error occurs in a control algorithm, the safety voltage may not be output or controlled accurately. In addition, because the PWM controller and the switching element are generally implemented in a semiconductor integrated circuit (IC), the controls and circuit implementations of the PWM controller and the switching element may not be simple.

Meanwhile, in case that the system 1 does not include an MLPE, an output voltage of the PV module 110 may be converted into a safety voltage by the control of a separate regulator such as a low dropout (LDO) or the like. However, even in the case of a regulator, because the regulator is implemented by using a semiconductor integrated circuit (IC), the control and circuit implementation of the regulator may not be simple.

In the disclosure, proposed is a device 120 which may stably perform a safety function according to a standard and easily perform the safety function without any complex configuration using an integrated circuit or the like.

Hereinafter, a configuration and operation of the device 120 according to an embodiment of the disclosure will be specifically described with reference to the drawings.

FIG. 2 is a block diagram illustrating an example of a device for performing a safety function according to an embodiment.

Referring to FIG. 2, the device 120 may include an electronic circuit 121 and a processor 122.

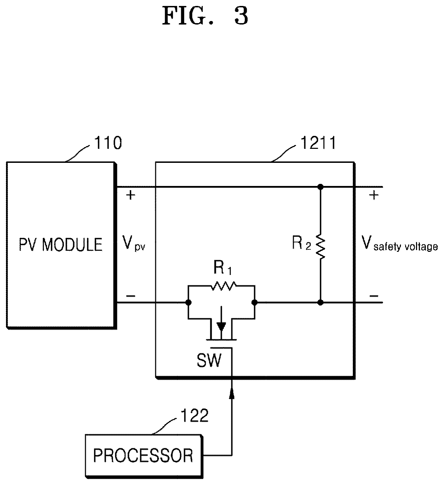

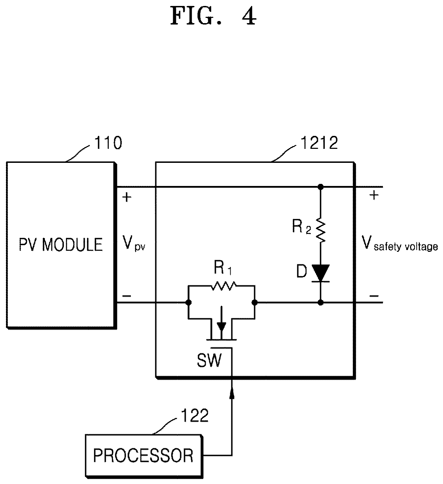

The electronic circuit 121 may convert an output voltage of the PV module 110 into a safety voltage. Examples of the electronic circuit 121 may be described with reference to FIGS. 3 and 4.

The processor 122 may control the electronic circuit 121 according to a state of the photovoltaic power generation system 1. For example, the processor 122 may control the electronic circuit 121 in case that a certain condition is satisfied. Here, the case that a certain condition is satisfied may mean a state in that the output voltage of the PV module 110 is inappropriately output as it is. For example, the case that a certain condition is satisfied may mean a state in that a switch to a safe mode may be required.

For example, the processor 122 may be a processor separately provided for the purpose of performing a safety function, but this is not limited thereto. For example, the processor 122 may be a processor included in the MLPE. In case that the processor 122 is a processor included in the MLPE, the configuration of the device 120 may be more simplified and the production expense of the device may be reduced. Hereinafter, for convenience of explanation, the processor 122 is described as a processor included in the MLPE.

For example, the processor 122 may include a microcontroller unit (MCU) for power control. The processor 122 may control a component (e.g. a hardware or software component) included in the device 120 or the MLPE by executing software such as a program or the like and may process various data or perform computation.

For example, the processor 122 may perform serial communication with an inverter or may perform power line communication (PLC) to receive a control signal, shutdown signal, or the like required for power optimization.

For example, the processor 122 may receive a shutdown signal from an inverter which monitors the overall operation situation of the photovoltaic power generation system 1, but this is not limited thereto.

For example, the processor 122 may monitor the operation state of the MLPE or the like to detect an abnormal situation, thereby generating a shutdown signal. Specifically, the processor 122 may analyze operation data of the MLPE or various data received from the PV module 110, a load, a grid, or the like to monitor an operation situation and may generate a shutdown signal when an abnormal situation occurs.

FIG. 3 is a diagram illustrating an example of an electronic circuit according to an embodiment.

Referring to FIG. 3, in case of switching to a safe mode, an electronic circuit 1211 may convert an output voltage Vₚᵥ of the PV module 110 into a safety voltage V_{safety voltage} and then output the safety voltage V_{safety voltage}.

The electronic circuit 1211 may include a switching element SW, a first resistor R1, and a second resistor R2. For example, the switching element SW and the first resistor R1 may be connected in parallel to each other, and the second resistor R2 may be connected in series to the parallel connection between the switching element SW and the first resistor R1.

At this time, the position of the parallel connection between the switching element SW and the first resistor R1 with respect to the position of the second resistor R2 is not limited to either one. For example, in addition to the electronic circuit 1211 illustrated in FIG. 3, the parallel connection between the switching element SW and the first resistor R1 may be arranged on a line connected to a positive + output terminal of the PV module 110.

For example, the switching element SW may be implemented as a field effect transistor (FET), bipolar junction transistor (BJT), or the like, but this is not limited thereto. In other words, anything that may be turned on or off under the control of the processor 122 may be considered a switching element SW without limitation.

The processor 122 may control the electronic circuit 1211 depending on a state of the photovoltaic power generation system 1. For example, in case that a certain condition is satisfied, the processor 122 may control the electronic circuit 121. For example, in case that a switch to a safe mode is required, the processor 122 may input an off signal to the switching element SW (i.e. turn off the switching element SW).

In case that the switching element SW is turned off, an output voltage Vₚᵥ of the PV module 110 applied to the electronic circuit 1211 may be distributed in proportion to resistance values of the first resistor R1 and the second resistor R2. Accordingly, as the switching element SW is turned off, the electronic circuit 1211 may output a safety voltage across the second resistor R2.

That is, because the voltage across the second resistor R2 is output as a safety voltage V_{safety voltage}, resistance values of the first resistor R1 and the second resistor R2 may be determined by considering the standard for safety voltage output of the system 1 and the structure of the system 1. Here, a resistance value of the first resistor R1 may be equal to or greater than a resistance value of the second resistor R2. For example, a resistance value of the first resistor R1 may have a much larger value than a resistance value of the second resistor R2.

As described above, because the processor 122 outputs a safety voltage by using resistance through a simple principle called the voltage distribution law, the safety function may be safely performed even if the electronic circuit 1211 does not include a complex circuit.

In addition, by using an electronic circuit 1211, the instability of a safety voltage control caused by an existing complex control algorithm and a defect in a semiconductor integrated circuit (IC) may be resolved.

In addition, even in case that the range of an output voltage of the PV module 110 is high, the control of a safety voltage may be quite possible only with the resistance distribution of the processor 122.

FIG. 4 is a diagram illustrating another example of an electronic circuit according to an embodiment.

Comparing FIGS. 3 and 4 with each other, an electronic circuit 1212 of FIG. 4 may differ from the electronic circuit 1211 of FIG. 3 in that the electronic circuit 1212 of FIG. 4 further includes a diode D. Therefore, a first resistor R1, a second resistor R2, and a switching element SW of the electronic circuit 1212 may be the same as those of the electronic circuit 1211 of FIG. 3, and therefore, a detailed description is omitted.

The diode D may be connected in series to the parallel connection between the switching element SW and the first resistor R1 and to the second resistor R2.

Similar to FIG. 3, the position of the parallel connection between the switching element SW and the first resistor R1 with respect to the series connection between the second resistor R2 and the diode D is not limited to either one. For example, in addition to the electronic circuit 1212 illustrated in FIG. 4, the parallel connection between the switching element SW and the first resistor R1 may be arranged on a line connected to a positive + output terminal of the PV module 110. Additionally, the positions of the second resistor R2 and the diode D are not limited to FIG. 4, and the arrangements thereof may be interchangeable.

As described above with reference to FIG. 3, in case that a switch to a safe mode is required, the processor 122 may input an off signal to the switching element SW (i.e. turn off the switching element SW).

In case that the switching element SW is turned off, an output voltage Vₚᵥ of the PV module 110 applied to the electronic circuit 1212 may be distributed in proportion to resistance values of the first resistor R1, the second resistor R2, and the diode D.

At this time, a safety voltage V_{safety voltage} may be the sum of a forward voltage of the diode D and a voltage distributed to the second resistor R2. That is, as the switching element SW is turned off, the electronic circuit 1212 may output a safety voltage across opposite terminals of the second resistor R2 and the diode D.

Therefore, a resistance value of the first resistor R1 and a resistance value of the second resistor R2 may be determined by considering a resistance value of the diode D, the standard for safety voltage output of the system 1, and the structure of the system 1. Additionally, a resistance value of the first resistor R1 may be equal to or greater than a resistance value of the second resistor R2. For example, a resistance value of the first resistor R1 may have a much larger value than a resistance value of the second resistor R2.

Meanwhile, the PV module 110 may have a different output voltage Vₚᵥ (particularly, maximum output voltage V_{oc}) depending on the characteristics of the product such as a manufacturer, material, or the like. Therefore, the range of an output voltage Vₚᵥ of the PV module 110 applied to the device 120 may vary depending on the type of the PV module 110.

In case that a diode D is included in the device 120, because the forward voltage of the diode D is constant, the device 120 may stably output a safety voltage V_{safety voltage}, which is required, regardless of the manufacturer or product characteristics of the PV module 110.

As described above, because the electronic circuit 1212 is a circuit implemented using the simple semiconductor characteristics of a diode, the level of a safety voltage may be easily adjusted and set according to the forward characteristics of the diode D.

In addition, because a voltage value across the diode D has a constant value, a safety voltage may be easily output regardless of the type of the PV module 110.

In addition, a safety voltage may be output using the simple semiconductor characteristics without any complex process of setting a safety voltage through the control of a PWM controller.

Additionally, because the level of a safety voltage, which is required, may be configured according to the simple forward characteristics of a diode, an agile circuit change may be possible depending on safety requirements of a user.

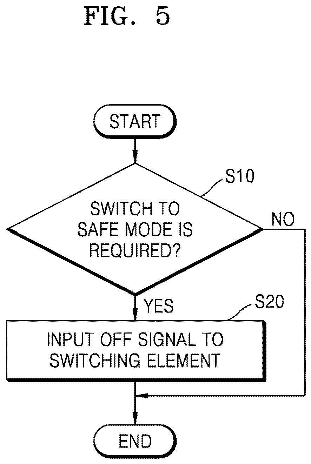

FIG. 5 is a diagram illustrating an example of operation of a device for performing a safety function according to an embodiment.

In S10, the processor 122 may identify whether a switch to a safe mode is required. In other words, the processor 122 may determine whether a certain condition is satisfied.

For example, the processor 122 may monitor a state of the system 1 to identify whether a switch to a safe mode is required depending on whether an abnormal situation occurs. Here, the safety mode may include an RSD mode.

Alternatively, in case of receiving a shutdown signal from an inverter, the processor 122 may identify that a switch to a safe mode is required.

Additionally, the device 120 may be used to determine whether the MLPE fails. In this case, the system 1 may be switched to a safe mode through the operation of an administrator such as installer, and whether the MLPE fails may be confirmed through a safety voltage output from the device 120.

In case that the processor 122 identifies that a switch to a safe mode is required for the system 1 (Yes in S10), the processor 122 may input an off signal to the switching element SW.

As the switching element SW is turned off, the electronic circuit 1211 may output a safety voltage across the second resistor R2, or the electronic circuit 1212 may output a safety voltage across opposite terminals of the second resistor R2 and the diode D.

In case that the processor 122 identifies that a switch to a safe mode is not required for the system 1 (No in S10), the algorithm may terminate. In other words, in case that the system 1 operates normally, the switching elements SW of the electronic circuit 1211 and the electronic circuit 1212 may be turned on.

In case that a switching element SW is turned on, the switching element SW may have on-resistance (RDS(ON)), the resistance value between drain and source.

Because a first resistor R1 and the switching element SW are connected in parallel to each other, a composite resistance may have a value smaller than the RDS(ON), so an output voltage of the PV module 110 may be applied directly to opposite terminals of a second resistor R2. That is, in case that the switching element SW is turned on, the device for performing a safety function 120 may not affect the system 1.

As described above, the device 120 may be operated stably without causing a burden such as power loss or the like to the system 1.

Meanwhile, the method described above may be written as a program which may be executed on a computer and may be implemented on a general-purpose digital computer which operates the program by using a computer-readable recording medium. Additionally, the structure of the data used in the method described above may be recorded on a computer-readable recording medium through various means. The computer-readable recording medium may include storage media such as magnetic storage media (e.g. ROM, RAM, USB, floppy disk, hard disk, or the like) and optical readable media (e.g. CD-ROM, DVD, or the like).

A person skilled in the art related to an embodiment will understand that the disclosure may be implemented in a modified form without departing from the essential characteristics of the description described above. Therefore, the disclosed methods should be considered in an illustrative rather than a restrictive sense, and the scope of a right may be illustrated not in the description described above, but in the scope of claims, and this should be interpreted to include all differences falling within the scope equivalent thereto.

## Claims

1. A device for performing a safety function, comprising:
an electronic circuit including a switching element, a first resistor and a second resistor; and
a processor configured to control operation of the electronic circuit such that a first voltage applied to the electronic circuit is converted into a second voltage in case that a certain condition is satisfied.

2. The device of claim 1, wherein
the processor is further configured to
convert the first voltage into the second voltage by turning off the switching element.

3. The device of claim 1, wherein
the first voltage includes an output voltage of at least one photovoltaic (PV) module included in a photovoltaic power generation system.

4. The device of claim 1, wherein
the switching element and the first resistor are connected in parallel to each other, and
the second resistor is connected in series to a parallel connection between the switching element and the first resistor.

5. The device of claim 1, wherein
the electronic circuit further includes a diode connected in series to the second resistor, and
the processor is further configured to
convert the first voltage into the second voltage by turning off the switching element, wherein
the second voltage includes the second resistor and a voltage of opposite terminals of the diode.

6. The device of claim 1, wherein
the processor is further configured to
monitor a state of the photovoltaic power generation system to identify whether the certain condition is satisfied.

7. The device of claim 1, wherein
the certain condition includes a condition that a switch to
a safe mode is required for a photovoltaic power generation system.

8. The device of claim 1, wherein
a resistance value of the first resistor is equal to or greater than a resistance value of the second resistor.

9. A photovoltaic power generation system, comprising:
a plurality of photovoltaic (PV) modules; and
a device connected to each of the plurality of PV modules; wherein
the device includes
an electronic circuit including a switching element, a first resistor and a second resistor and
a processor configured to control the electronic circuit such that a first voltage applied to the electronic circuit is converted into a second voltage according to a state of the photovoltaic power generation system.

10. The system of claim 9, wherein
the processor is further configured to
convert the first voltage into the second voltage by turning off the switching element.

11. The system of claim 9, wherein
the first voltage includes an output voltage of at least one PV module included in a photovoltaic power generation system.

12. The system of claim 9, wherein
the switching element and the first resistor are connected in parallel to each other, and
the second resistor is connected in series to a parallel connection between the switching element and the first resistor.

13. The system of claim 9, wherein
the electronic circuit further includes a diode connected in series to the second resistor, and
the processor is further configured to
convert the first voltage into the second voltage by turning off the switching element, wherein
the second voltage includes the second resistor and a voltage of opposite terminals of the diode.

14. The system of claim 9, wherein
the processor is further configured to
monitor a state of the photovoltaic power generation system to identify whether a certain condition is satisfied.

15. The system of claim 9, wherein
a resistance value of the first resistor is equal to or greater than a resistance value of the second resistor.
